# EUROPEAN PATENT SPECIFICATION

(11) **EP 3 372 291 B1**
(45) Date of publication and mention of the grant of the patent: **24.03.2021**
(21) Application number: 18160998.3
(22) Date of filing: 09.03.2018
(51) Int. Cl.: B01D 29/03, B03C 1/033, B01D 21/00, B01D 21/26, B01D 29/58, B01D 29/90, B03C 1/30, B01D 35/06, B03C 1/28, F24D 19/00

(54) **SEPARATOR FOR SEPARATING IMPURITIES FROM FLUIDS**
SEPARATOR ZUR ABTRENNUNG VON VERUNREINIGUNGEN VON FLÜSSIGKEITEN
SÉPARATEUR POUR SÉPARER DES IMPURETÉS DE FLUIDES

(30) Priority: 10.03.2017 IT 201700026845
(43) Date of publication of application: 12.09.2018
(73) Proprietor: Mut Meccanica Tovo S.p.A., 36075 Montecchio Maggiore (VI) (IT)
(72) Inventor: CATTELAN, Gabriele, 36100 VICENZA (IT); DAL MASO, Luca, 36075 MONTECCHIO MAGGIORE (VI) (IT); FACCHIN, Roberto, 36078 VALDAGNO (VI) (IT)
(74) Representative: Marchioro, Paolo

(56) References cited:
- EP-A1- 2 977 668
- WO-A1-2010/149787
- WO-A1-2013/041245
- GB-A- 2 491 361

## Description

The invention regards a separator for separating impurities and pollutant particles present in a fluid circulating in hydraulic systems of various types.

It is known that in fluids circulating in hydraulic circuits, in heating systems, in systems for distributing fluids and the like, there are dispersed pollutant particles of various nature which must be separated from the fluid in order to guarantee an optimal operation of the systems.

In particular, the pollutant particles and impurities can be of the ferrous and of the sandy type which are formed due to corrosion or mechanical deterioration of the components of the system during normal operation thereof. Thus, in order to ensure the optimal operation of the hydraulic circuit, it is important to remove such particles which, if they continue circulating in the fluid, could cause the wear jeopardising the functionality of the components of the system, especially those comprising rotary parts.

The deposit of particles could cause, for example, the blocking of taps, valves or pumps, especially with permanent magnets, or even the clogging of condensing boilers, or even the scratching of the cylinders or stems of the actuators.

Thus, in systems in general, there are utilised special separators for separating impurities from the circulating fluid so as to avoid the accumulation or deposit thereof. Such separators generally comprise a recipient provided with an inlet path and an outlet path for the fluid, in which there is present a filtering device, which tends to divert and slow the flow of the fluid, as well as stop the pollutant particles facilitating their downward drop, i.e. towards a sedimentation chamber provided with an impurities discharge path arranged on the bottom. The separators of the prior art generally also comprise magnetic means for separating metal particles.

A known filtering apparatus is described in the patent document EP2977668 and it comprises a housing provided with a separator chamber located between apertures for ingress and egress of the fluid into and out of the housing respectively. Such filtering apparatus present a main drawback which consist in its disposition in-line to the pipe where the fluid flows. With this particular arrangement it is disadvantageously necessary to interrupt the flow of the fluid to carry out the maintenance and cleaning operations of the filtering apparatus.

Another known impurities separator is described in the patent document WO2013/041245 and it comprises a recipient in which there is arranged a filtering device consisting of a spiral-wound grid element or a plurality of radially-arranged grid elements, designated for separating the impurities of the fluid that accumulate in an underlying sedimentation chamber by gravity. Furthermore, such separator has magnetic means arranged on the outer circumference of the sedimentation chamber.

However, this device reveals various drawbacks. A first drawback lies in the conformation of the filtering device, so as not to facilitate the directing of the flow towards the underlying sedimentation chamber and causing the accumulation of particles of larger dimensions in given areas of the grid element reducing the separation capacity of the latter in the long run. A further drawback lies in the arrangement of the magnetic means. As a matter of fact, such circumferential arrangement in the sedimentation chamber generates a magnetic field which propagates radially but does not reach the central area of the chamber in an optimal manner, increasing the number of magnetic particles present in the fluid that are able to elude the attraction of the magnetic means.

In order to overcome such latter drawback, separators providing for arranging magnetic means in a cylinder that is positioned at the centre of the separation chamber are known in the market. An example of such separator is described in the document GB2491361 wherein a magnetic filter apparatus for filtering magnetic particulates from a fluid comprises a magnetic element having a longitudinally extension parallel to the direction of the fluid and arranged inside a sedimentation chamber. Other separators known in the art and similar to the one already disclosed furthermore comprise a filtering grid element which surrounds laterally the magnetic means. The aforementioned separator has a first advantage lying in that the magnetic means are arranged centrally with respect to the flow of the fluid but, disadvantageously, the geometrical arrangement of the grid element does not allow an optimal separation of the pollutant particles which are mainly isolated due to the mechanical impact thereof on the meshes of the grid.

Another drawback of the separators of the prior art regards manufacturing the filtering device contained therein. As a matter of fact, each filtering device must be manufactured according to the specific measurements of the recipient and the chamber where it is to be positioned.

A further drawback of the separators above described lies in the possible contamination of the "clean" out-flowing fluid with the "dirty" in-flowing fluid. As a matter of fact, in the separators of the prior art, after flowing through the filtering device a first time, in order to be able to flow out from the separator, the fluid must necessarily flow through the separation chamber and/or the filtering device a second time, with the risk of bringing the pollutant particles deposited on the meshes of the filtering grid back to the surface and conveying them toward the system.

Last but not least, a drawback of the separators of the prior art lies in the possibility that the in-flowing fluid, pushed by the in-flow pressure, be conveyed towards the outlet path of the separator without flowing through the filtering devices first and thus reaching the system without proper removal of the pollutant particles.

The aim of the present invention is to overcome all the aforementioned limitations and drawbacks.

In particular, an object of the invention is to provide an impurities separator that enables an optimal separation of the pollutant particles present in a fluid.

Another object of the invention is to provide an impurities separator whose filtering device has a geometrical conformation that enables improving the separation of the particles with respect to the separators of the prior art.

A further object of the invention is to provide an impurities separator that enables overcoming the risk of contamination between the in-flowing fluid and the out-flowing fluid.

And still another object of the invention is to provide an impurities separator that is easy to mount and that can be modulated on recipients of different sizes.

Last but not least, an object of the present invention is to provide an impurities separator that can be manufactured easily and at low costs.

The aforementioned objects are attained by providing a separator for separating impurities present in a circulating fluid in a system according to the main claim.

Further characteristics of the impurities separator are outlined in the dependent claims.

The aforementioned objects and advantages to be outlined hereinafter will be apparent from the description of some preferred embodiments of the invention provided by way of non-limiting example with reference to the attached drawings, wherein:
- fig. 1 shows an assembled axonometric view of the impurities separator of the invention;
- fig. 2 shows an exploded axonometric view of a first preferred embodiment of the separator of the invention;
- fig. 3 shows an assembled longitudinal section of the separator of the invention of fig. 2;
- fig. 4 shows an exploded axonometric view of a second preferred embodiment of the separator of the invention;
- fig. 5 shows an assembled longitudinal section of the separator of the invention of fig. 4;
- fig. 6 shows an axonometric view of the filtering device of the invention;
- fig. 7 shows the top view of the filtering device of the invention;
- fig. 8 shows the cross-sectional view of the filtering device of fig. 7 according to the line of section VI-VI.

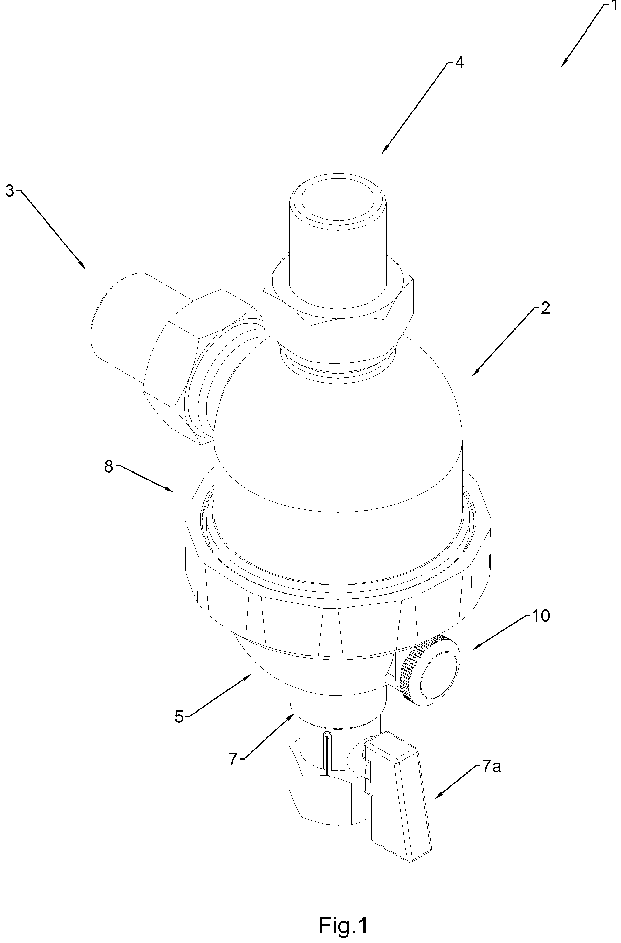

The impurities separator subject of the invention is represented in fig. 1 where it is indicated in its entirety with 1. It is used for separating impurities and pollutant particles that are present in the fluids of hydraulic circuits of various types.

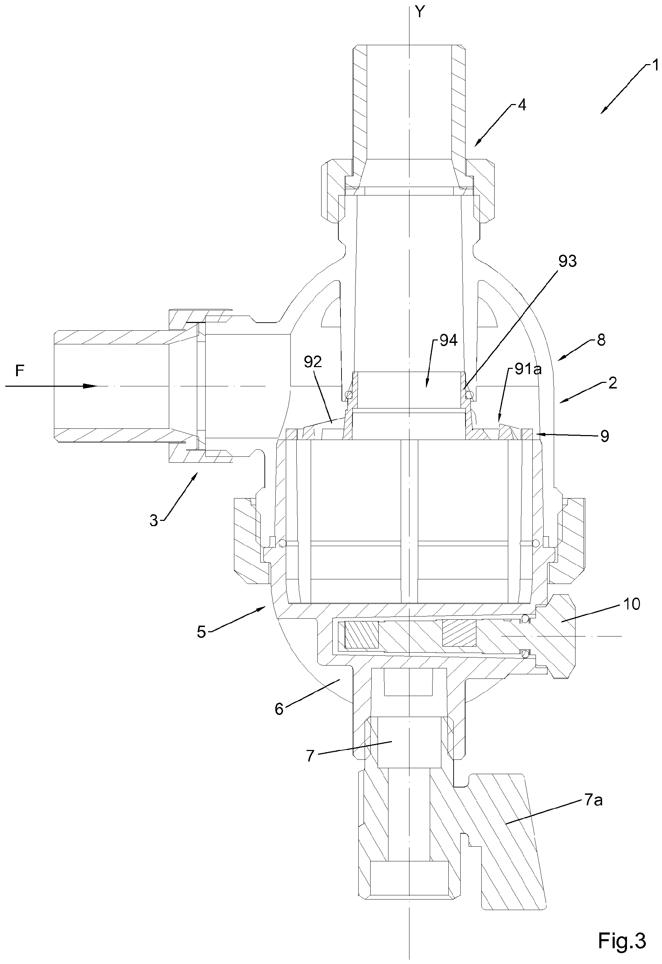

As observable in the aforementioned fig. 1 and in fig. 3, according to a first preferred embodiment of the invention, the separator **1** comprises a recipient **2** extending according to a longitudinal direction **Y** and on which there are identified an inlet path **3** and an outlet path **4** for the fluid **F.** In the aforementioned recipient **2** there are identified a chamber **5** for the sedimentation of the impurities, preferably provided on the bottom **6** of a discharge path **7** in which there is present a shut-off valve **7a,** and a separation chamber **8,** between which there is interposed a filtering device **9** suitable to slow the motion of the fluid **F** and withhold the impurities present therein.

In particular, as observable in fig. 3, such separation chamber **8** is arranged coaxial according to the longitudinal direction **Y** above the sedimentation chamber **5** and it is communicating with the inlet path **3,** with the outlet path **4** and with the sedimentation chamber **5.**

Advantageously, the inlet path **3** is directly communicating with the separation chamber **8** and it has a section through which the fluid flows that is smaller than the section of the latter. Such characteristic facilitates the slowing of the motion of the in-flowing fluid **F** and, thus, the reduction of the speed for drawing the impurities suspended therein.

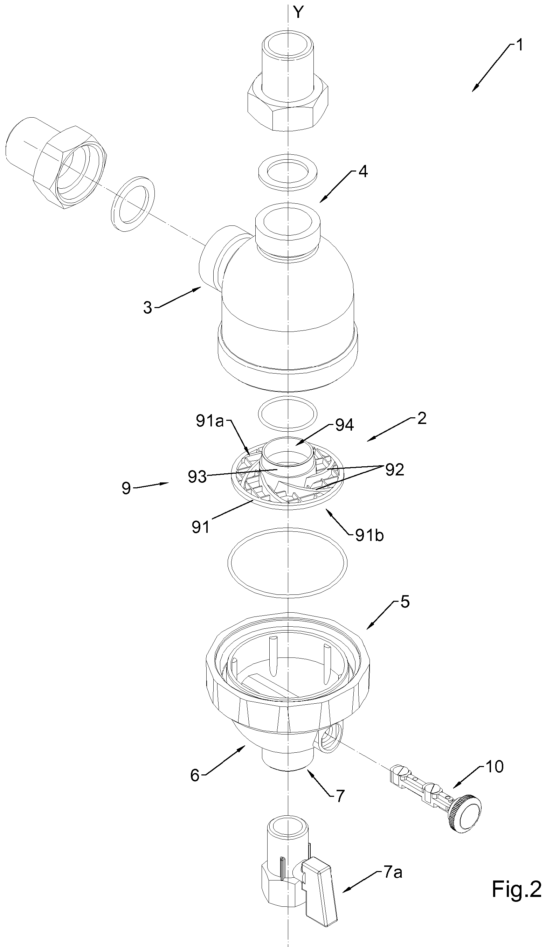

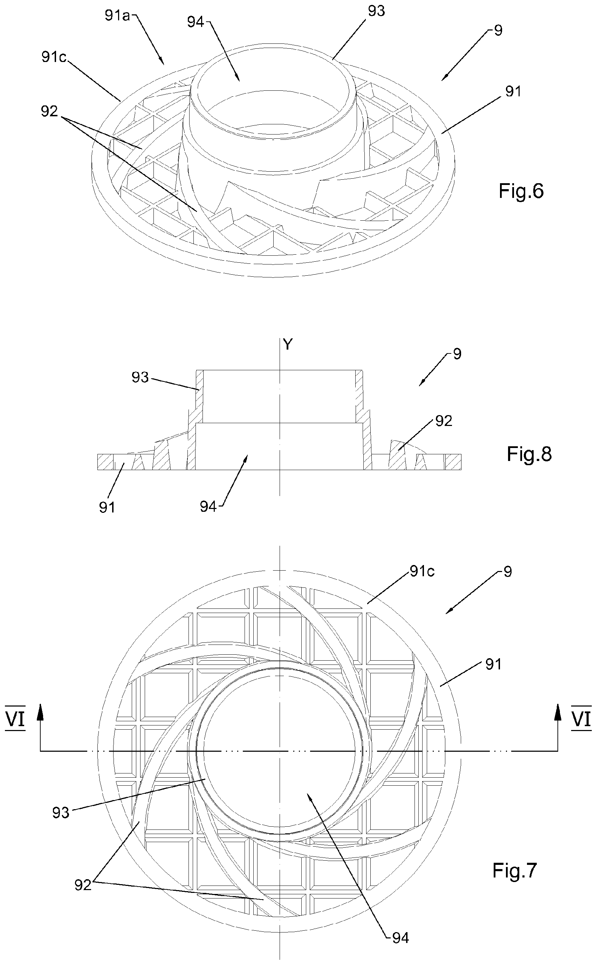

As regards the filtering device **9,** as observable in fig. 2 and in the detail of fig. 6, it comprises a single grid plate **91** arranged substantially in the direction parallel to the in-flow of the fluid **F.**

Advantageously, such grid plate **91** is configured so as to enable the passage of the fluid **F** and withhold the impurities suspended therein.

Preferably, the grid plate **91** is substantially disc-shaped and the recipient **2** is, in cross-section, circular-shaped.

However, according to different embodiments of the invention, it cannot be ruled out that such grid plate **91** be prismatic-shaped and the recipient **2** be, in cross-section, polygonal-shaped.

Furthermore, according to the invention, the grid plate **91** comprises at least one laminar element **92,** defined above one of its main surfaces **91a, 91b,** with a substantially radial development axis.

Such geometrical conformation offers various advantages: firstly, the presence of a grid plate **91** enables the in-flowing fluid F to mechanically impact the meshes of the grid, slowing the motion of the fluid and facilitating the dropping of the suspended impurities towards the sedimentation chamber **5** by gravity. Furthermore, the conformation of the laminar element **92** facilitates the creation of a cyclonic motion of the fluid **F** which simultaneously impacts towards the inner wall of the separation chamber **8** and it is conveyed towards the sedimentation chamber **5** where the flow of the fluid **F** becomes substantially stationary and the impurities sediment towards the bottom **6** by gravity.

As shown in fig. 7, according to the first preferred embodiment of the invention, such at least one laminar element **92** has a profile decreasing towards the edge **91c** of the grid plate **91.** Furthermore, according to such first preferred embodiment, the aforementioned laminar element **92** has a helical development along its development axis.

Such geometrical characteristics advantageously facilitate the creation of the cyclonic motion even further.

However, according to different embodiments of the invention, it cannot be ruled out that the profile of the laminar element **92** be of the discretely decreasing or non-decreasing type. In addition, it cannot be ruled out that such laminar element **92** has a straight development along its development axis.

Advantageously, according to the first preferred embodiment of the invention, the grid plate **91** comprises a plurality of laminar elements **92** which cause repeated diversions of the flow of the fluid **F** further facilitating the creation of the cyclonic motion.

Preferably, such laminar elements **92** are exclusively defined on the main surface **91a** of the grid plate **91** arranged facing the inlet path **3** when the separator **1** of the invention is assembled in the use configuration.

Still preferably, such laminar elements **92** are defined on the surface of the grid plate **91** according to radial development axes spaced angularly with respect to each other. Even more preferably, such angular spaces are mutually coincident, as shown in fig. 7.

According to alternative embodiments of the invention, it cannot be ruled out that such laminar elements **92** be defined simultaneously on both main surfaces **91a, 91b** of the grid plate **91;** furthermore, it cannot be ruled out that such laminar elements **92** be defined passing through the grid plate **91.**

As observable in fig. 2 and in the details of figs. 6 to 8, according to the first preferred embodiment of the invention, the grid plate **91** of the invention comprises - in a central position - a tubular body **93** with a development axis substantially orthogonal to the aforementioned main surfaces **91a, 91b** and defining a duct **94.**

Advantageously, such duct **94** is suitable to enable the passage of the fluid **F** from the sedimentation chamber **5** to the outlet path **4.**

Preferably, an end of the tubular body **93** is connected to the outlet path **4** in a hermetic manner so as to enable the fluid **F** to flow from the separation chamber **8** to the outlet path **4** exclusively flowing through the sedimentation chamber **5** and the duct **94.**

Preferably, such tubular body **93** is, according to a cross-sectional plane, circular-shaped.

However, according to different embodiments of the invention, it cannot be ruled out that such tubular body **93** be, according to a cross-sectional plane, polygonal-shaped or that such tubular body **93** be absent.

The first preferred embodiment of the invention provides for that the separator **1** also comprises a magnetic element **10** suitable to separate the impurities with magnetic characteristics from the fluid **F.**

In particular, such magnetic element **10** preferably has a substantially longitudinal development and it is arranged in the sedimentation chamber **5** according to a direction incident to the longitudinal direction **Y.**

Advantageously, the presence of a magnetic element **10** enables an optimal separation of the particles with magnetic characteristics, ferrous particles for instance, present in the fluid **F.** In particular, such arrangement of the magnetic element **10** enables a better distribution of the magnetic flow which regards the section of the sedimentation chamber **5** and the separation of the ferrous particles under stationary flow conditions.

It is specified that the magnetic element **10** can be arranged according to per se known methods, for example arranged externally to the circular surface of the separator **1** at the height of the sedimentation chamber **5,** or it may be absent.

Preferably but not necessarily, the separator **1** of the invention is made of polymeric material. Still preferably, such polymeric material is selected from among polymeric materials of the prior art that have technical characteristics compatible with use in heating and fluid circulation systems in general. In particular, polymeric materials suitable for such use are prior art materials with resistance to abrasion due to the continuous passage of fluids, resistance to plastic deformation, low absorption of humidity and compatibility with the additives used in the circuits.

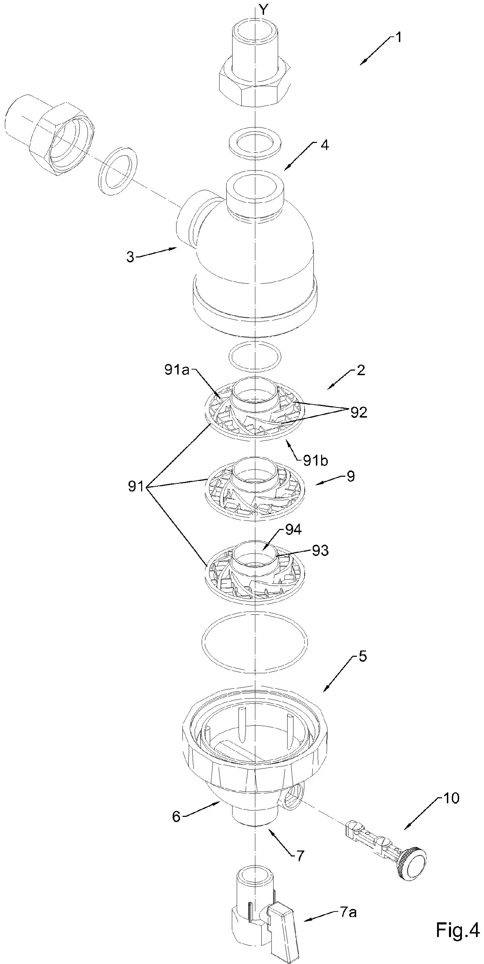

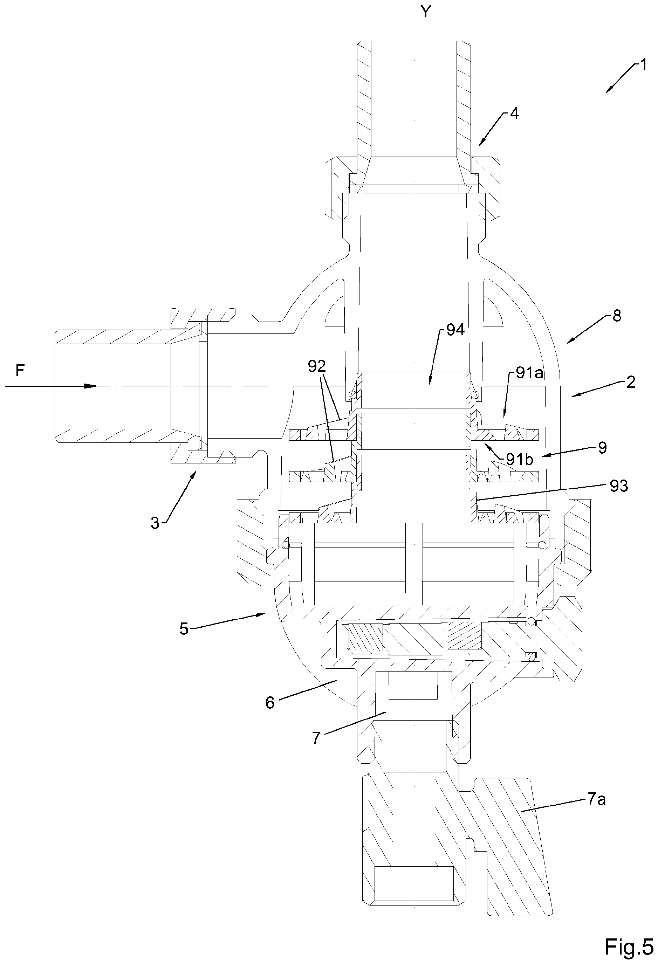

A second preferred embodiment of the invention, represented in figs. 4 and 5, includes all the characteristics described for the first preferred embodiment and the variants, save for the fact that the filtering device **9** comprises a plurality of grid plates **91** operatively removably superimposed according to planes substantially parallel to each other.

Advantageously, the presence of a plurality of grid plates **91** amplifies the impurities separation ability of the separator of the invention.

In particular, such second preferred embodiment provides for the tubular bodies **93** be hermetically connected to each other and to the outlet path 4 so as to define a single duct **94.**

Advantageously, such arrangement enables the flow of the fluid **F** from the separation chamber **8** to the outlet path **4** exclusively through the sedimentation chamber **5** and the duct **94.**

Further advantageously, the aforementioned tubular bodies **93** of the grid plates **91** are removably connected to each other so as to be able to vary the height of the filtering device **9** according to the actual dimensions of the recipient **2.**

However, in such embodiment, it cannot be ruled out that each grid plate **91** be not provided with the tubular body **93.**

Operatively, for both the aforementioned preferred embodiments, the fluid **F** flowing into the recipient **2** is conveyed from the separation chamber **8** towards the sedimentation chamber **5** through the filtering device **9.** The motion of the in-flowing fluid **F** is slowed due to the increase of the cross-section of the recipient **2** with respect to the section of the inlet path **3,** to the mechanical impact with the meshes and the laminar elements **92** of the grid plate **91** or of the grid plates **91** and to the cyclonic motion that is created due to the geometric conformation of the filtering device **9,** as indicated previously. Thus, the impurities present in the fluid **F** deposit on the filtering device **9** and separate due to sedimentation towards the bottom **6** by gravity. Subsequently, the filtered fluid **F** is conveyed towards the outlet path **4** through the duct **94.**

Advantageously, the presence of the duct **94,** hermetically connected to the outlet path **4,** prevents the fluid **F** from flowing out from the separator **1** without flowing through the filtering device **9** and the sedimentation chamber **5** first; furthermore, the out-flowing fluid **F** cannot come into contact with the in-flowing fluid **F** and potentially be contaminated by it, thus overcoming one of the drawbacks of the separators of the prior art.

Periodically, in order to remove the impurities subject of sedimentation on the bottom **6,** the shut-off valve **7a** is used to open the discharge path **7** thus releasing a part of the fluid **F** contained in the separator **1** alongside the impurities and the particles dispersed therein.

The operation of the separator is restored by closing the valve again.

Thus, in the light of the above, the impurities separator of the invention attains all the pre-set objects.

In particular, the object of providing an impurities separator that enables an optimal separation of the pollutant particles present in a fluid is attained due to the geometrical configuration of the filtering device of the invention.

Furthermore, the effects of slowing the motion of the in-flowing fluid, the mechanical impact on the meshes of the filtering device, the cyclonic motion and the presence of a magnetic element combined together to improve the separation of impurities suspended in the fluid with respect to the separators of the prior art.

Furthermore, the presence of the duct for the out-flow of the filtered fluid from the sedimentation chamber enables overcoming the risk of contamination between the in-flowing fluid and the filtered out-flowing fluid.

Still, the impurities separator of the invention is easy to mount and it can be easily adapted to recipients of different sizes due to the modular filtering devices.

Last but not least, the impurities separator of the invention attains the object of being easy to manufacture and at low costs.

## Claims

1. Separator (1) for separating impurities present in a fluid (F) circulating in a system, comprising a recipient (2) developing according to a longitudinal direction (Y) and in which there are identified:
- an inlet path (3) and an outlet path (4) for said fluid (F);
- a chamber (5) for the sedimentation of said impurities;
- a separation chamber (8) communicating with said inlet path (3), with said outlet path (4) and with said sedimentation chamber (5), said separation chamber (8) being arranged coaxial according to said longitudinal direction (Y) above said sedimentation chamber (5);
- a filtering device (9) housed between said separation chamber (8) and said sedimentation chamber (5),
said filtering device (9) comprising at least one grid plate (91) arranged in the direction parallel to the in-flow of said fluid (F) and configured to enable the passage of said fluid (F) and withhold said impurities,
**characterised in that** said grid plate (91) comprises in its central position a tubular body (93) with development axis orthogonal to the main surfaces (91a, 91b) of said grid plate (91), said tubular body (93) defining a duct (94) for the passage of said fluid (F) from said sedimentation chamber (5) to said outlet path (4), said grid plate (91) further **characterised in that** it comprises at least one laminar element (92) defined above one of the main surfaces (91a, 91b) thereof, with a radial development axis so as to facilitate the cyclonic motion of said fluid (F).

2. Impurities separator (1) according to claim 1, **characterised in that** said laminar element (92) has a profile decreasing towards the edge (91c) of said grid plate (91).

3. Impurities separator (1) according to any one of the preceding claims, **characterised in that** said laminar element (92) has a helical development along said development axis.

4. Impurities separator (1) according to any one of the preceding claims, **characterised in that** said grid plate (91) comprises a plurality of said laminar elements (92).

5. Impurities separator (1) according to any one of the preceding claims, **characterised in that** an end of said tubular body (93) of said grid plate (91) is hermetically connected to said outlet path (4) so as to enable said fluid (F) to flow from said separation chamber (8) to said outlet path (4) through said sedimentation chamber (5) and said duct (94).

6. Impurities separator (1) according to any one of the preceding claims, **characterised in that** said filtering device (9) comprises a plurality of grid plates (91) superimposed according to planes substantially parallel to each other in which each tubular body (93) of each grid plate (91) of said plurality of grid plates (91) is arranged so as to define said duct (94).

7. Impurities separator (1) according to any one of the preceding claims, **characterised in that** it comprises a magnetic element (10) suitable to separate the impurities with magnetic characteristics from said fluid (F).

8. Impurities separator (1) according to claim 7, **characterised in that** said magnetic element (10) has a substantially longitudinal development, said magnetic element (10) being arranged inside said sedimentation chamber (5) according to an incident direction with respect to said longitudinal direction (Y).

9. Impurities separator (1) according to any one of the preceding claims, **characterised in that** said recipient (2) has a circular-shaped cross-section and said grid plate (91) is substantially disc-shaped.

## Patentansprüche

1. Abscheider (1) zur Separierung von Verunreinigungen in einer in einem System zirkulierenden Flüssigkeit (F), einen Behälter (2) umfassend, der sich einer Längsrichtung (Y) entsprechend erstreckt und in dem Folgendes identifiziert ist:
- ein Einlassweg (3) und ein Auslassweg (4) für die besagte Flüssigkeit (F);
- eine Kammer (5) zum Absetzen der besagten Verunreinigungen;
- eine Abscheidekammer (8), die mit dem besagten Einlassweg (3), mit dem besagten Auslassweg (4) und mit der besagten Absetzkammer (5) kommuniziert, wobei die besagte Abscheidekammer (8) entsprechend der besagten Längsrichtung (Y) koaxial oberhalb der besagten Absetzkammer (5) angeordnet ist;
- eine Filtervorrichtung (9), die zwischen der besagten Abscheidekammer (8) und der besagten Absetzkammer (5) aufgenommen ist,
wobei die besagte Filtervorrichtung (9) wenigstens eine Gitterplatte (91) umfasst, die in der zum Zufluss der besagten Flüssigkeit (F) parallelen Richtung angeordnet und so konfiguriert ist, dass sie den Durchfluss der besagten Flüssigkeit (F) erlaubt und die besagten Verunreinigungen zurückhält,
**dadurch gekennzeichnet, dass** die besagte Gitterplatte (91) in ihrer zentralen Position einen röhrenförmigen Körper (93) umfasst, dessen Entwicklungsachse orthogonal zu den Hauptoberflächen (91a, 91b) der besagten Gitterplatte (91) verläuft, wobei der besagte röhrenförmige Körper (93) eine Leitung (94) für den Fluss der besagten Flüssigkeit (F) aus der besagten Absetzkammer (5) zu dem besagten Auslassweg (4) definiert, wobei die besagte Gitterplatte (91) **dadurch gekennzeichnet ist, dass** sie des Weiteren wenigstens ein blätterförmiges Element (92) umfasst, das oberhalb einer ihrer Hauptoberflächen (91a, 91b) definiert ist, mit einer radialen Entwicklungsachse, um die zyklonische Bewegung der besagten Flüssigkeit (F) zu erleichtern.

2. Verunreinigungsabscheider (1) nach Patentanspruch 1, **dadurch gekennzeichnet, dass** das besagte blätterförmige Element (92) ein Profil aufweist, das zur Kante (91c) der besagten Gitterplatte (91) hin abnimmt.

3. Verunreinigungsabscheider (1) nach einem jeden der vorstehenden Patentansprüche, **dadurch gekennzeichnet, dass** das besagte laminare Element (92) eine schraubenförmige Entwicklung um die besagte Entwicklungsachse aufweist.

4. Verunreinigungsabscheider (1) nach einem jeden der vorstehenden Patentansprüche, **dadurch gekennzeichnet, dass** die besagte Gitterplatte (91) eine Vielzahl der besagten blätterförmigen Elemente (92) umfasst.

5. Verunreinigungsabscheider (1) nach einem jeden der vorstehenden Patentansprüche, **dadurch gekennzeichnet, dass** ein Ende des besagten röhrenförmigen Körpers (93) der besagten Gitterplatte (91) hermetisch mit dem besagten Auslassweg (4) verbunden ist, um den Fluss der besagten Flüssigkeit (F) aus der besagten Abscheidekammer (8) durch die besagte Absetzkammer (5) und die besagte Leitung (94) zu dem besagten Auslassweg (4) zu erlauben.

6. Verunreinigungsabscheider (1) nach einem jeden der vorstehenden Patentansprüche, **dadurch gekennzeichnet, dass** die besagte Filtervorrichtung (9) eine Vielzahl von Gitterplatten (91) umfasst, die im Wesentlichen zueinander parallelen Ebenen entsprechend übereinander liegen, wobei jeder röhrenförmige Körper (93) jeder Gitterplatte (91) der besagten Vielzahl von Gitterplatten (91) so angeordnet ist, dass er die besagte Leitung (94) definiert.

7. Verunreinigungsabscheider (1) nach einem jeden der vorstehenden Patentansprüche, **dadurch gekennzeichnet, dass** er ein magnetisches Element (10) umfasst, das dazu geeignet ist, die Verunreinigungen mit magnetischen Eigenschaften von der besagten Flüssigkeit (F) zu trennen.

8. Verunreinigungsabscheider (1) nach Patentanspruch 7, **dadurch gekennzeichnet, dass** das besagte magnetische Element (10) eine im Wesentlichen längliche Entwicklung aufweist, wobei das besagte magnetische Element (10) einer auf die besagte Längsrichtung (Y) einfallenden Richtung entsprechend innerhalb der besagten Absetzkammer (5) angeordnet ist.

9. Verunreinigungsabscheider (1) nach einem jeden der vorstehenden Patentansprüche, **dadurch gekennzeichnet, dass** der besagte Behälter (2) einen kreisförmigen Querschnitt aufweist und die besagte Gitterplatte (91) im Wesentlichen scheibenförmig ist.

## Revendications

1. Séparateur (1) pour la séparation d'impuretés présentes dans un fluide (F) circulant dans un système, comprenant un récipient (2) qui se développe selon une direction longitudinale (Y) et dans lequel on identifie:
- une voie d'entrée (3) et une voie de sortie (4) pour ledit fluide (F);
- une chambre (5) pour la sédimentation desdites impuretés;
- une chambre de séparation (8) communiquant avec ladite voie d'entrée (3), avec ladite voie de sortie (4) et avec ladite chambre de sédimentation (5), ladite chambre de séparation (8) étant disposée de manière coaxiale selon ladite direction longitudinale (Y) au-dessus de ladite chambre de sédimentation (5);
- un dispositif de filtration (9) logé entre ladite chambre de séparation (8) et ladite chambre de sédimentation (5),
ledit dispositif de filtration (9) comprenant au moins une plaque à grille (91) disposée dans la direction parallèle au flux en entrée dudit fluide (F) et configurée de manière à consentir le passage dudit fluide (F) et retenir lesdites impuretés,
**caractérisé en ce que** ladite plaque à grille (91) comprend dans sa partie centrale un corps tubulaire (93) avec axe de développement perpendiculaire aux surfaces principales (91a, 91b) de ladite plaque à grille (91), ledit corps tubulaire (93) définissant un conduit (94) pour le passage dudit fluide (F) de ladite chambre de sédimentation (5) à ladite voie de sortie (4), ladite plaque à grille (91) étant également **caractérisée en ce qu'**elle comprend au moins un élément laminaire (92) défini au-dessus d'une des surfaces principales (91a, 91b) de celui-ci, avec un axe de développement radial de manière à faciliter le mouvement cyclonique dudit fluide (F).

2. Séparateur d'impuretés (1) selon la revendication 1, **caractérisé en ce que** ledit élément laminaire (92) présente un profil décroissant vers le bord (91c) de ladite plaque à grille (91).

3. Séparateur d'impuretés (1) selon l'une quelconque des revendications précédentes, **caractérisé en ce que** ledit élément laminaire (92) présente un développement hélicoïdal le long dudit axe de développement.

4. Séparateur d'impuretés (1) selon l'une quelconque des revendications précédentes, **caractérisé en ce que** ladite plaque à grille (91) comprend une pluralité desdits éléments laminaires (92).

5. Séparateur d'impuretés (1) selon l'une quelconque des revendications précédentes, **caractérisé en ce qu'**une extrémité dudit corps tubulaire (93) de ladite plaque à grille (91) est reliée de manière hermétique à ladite voie de sortie (4) pour consentir l'écoulement dudit fluide (F) de ladite chambre de séparation (8) à ladite voie de sortie (4) à travers ladite chambre de sédimentation (5) et ledit conduit (94).

6. Séparateur d'impuretés (1) selon l'une quelconque des revendications précédentes, **caractérisé en ce que** ledit dispositif de filtration (9) comprend une pluralité de plaques à grille (91) superposées selon des plans essentiellement parallèles entre eux où chaque corps tubulaire (93) de chaque plaque à grille (91) de ladite pluralité de plaques à grille (91) est disposé de manière à définir ledit conduit (94).

7. Séparateur d'impuretés (1) selon l'une quelconque des revendications précédentes, **caractérisé en ce qu'**il comprend un élément magnétique (10) apte à séparer les impuretés avec caractéristiques magnétiques dudit fluide (F).

8. Séparateur d'impuretés (1) selon la revendication 7, **caractérisé en ce que** ledit élément magnétique (10) présente un développement essentiellement longitudinal, ledit élément magnétique (10) étant disposé à l'intérieur de ladite chambre de sédimentation (5) selon une direction incidente par rapport à ladite direction longitudinale (Y).

9. Séparateur d'impuretés (1) selon l'une quelconque des revendications précédentes, **caractérisé en ce que** ledit récipient (2) présente une section transversale de forme circulaire et ladite plaque à grille (91) présente une forme essentiellement de disque.
